# EUROPEAN PATENT SPECIFICATION

(11) **EP 4 007 390 B1**
(45) Date of publication and mention of the grant of the patent: **22.10.2025**
(21) Application number: 20849456.7
(22) Date of filing: 05.08.2020
(51) Int. Cl.: H04W 64/00, H04W 36/14, H04W 36/00

(54) **TERMINAL LOCATION METHOD, APPARATUS AND SYSTEM**
VERFAHREN, VORRICHTUNG UND SYSTEM ZUR ORTUNG VON ENDGERÄTEN
PROCÉDÉ, APPAREIL ET SYSTÈME DE LOCALISATION DE TERMINAL

(30) Priority: 05.08.2019 CN 201910717203
(43) Date of publication of application: 01.06.2022
(73) Proprietor: Huawei Technologies Co., Ltd., Longgang District Shenzhen, Guangdong 518129 (CN)
(72) Inventor: ZHOU, Runze, Shenzhen, Guangdong 518129 (CN); MA, Jingwang, Shenzhen, Guangdong 518129 (CN)
(74) Representative: Isarpatent
(86) International application number: PCT/CN2020/107208
(87) International publication number: WO 2021/023235

(56) References cited:
- WO-A1-2019/036421
- CN-A- 101 686 540
- CN-A- 101 686 540
- CN-A- 101 754 152
- CN-A- 101 754 152
- CN-A- 101 998 561
- CN-A- 104 093 124
- CN-A- 104 093 124
- US-A1- 2006 121 914
- "3rd Generation Partnership Project; Technical Specification Group Services and System Aspects; Study on Enhancement to the 5GC LoCation Services (Release 16)", 3GPP STANDARD; TECHNICAL REPORT; 3GPP TR 23.731, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.0, 19 December 2018 (2018-12-19), pages 1 - 170, XP051591219
- CATT: "New Solution for KI#15: Location continuity support for N26 based Handovers", vol. SA WG2, no. Vilnius, Lithuania; 20180702 - 20180706, 6 July 2018 (2018-07-06), XP051538542, Retrieved from the Internet <URL:http://www.3gpp.org/ftp/tsg%5Fsa/WG2%5FArch/TSGS2%5F128%5FVilnius/Docs/S2%2D187101%2Ezip> [retrieved on 20180706]
- "3rd Generation Partnership Project; Technical Specification Group Services and System Aspects; Study on Enhancement to the 5GC LoCation Services (Release 16)", 3GPP STANDARD; TECHNICAL REPORT; 3GPP TR 23.731, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 12 July 2018 (2018-07-12), Mobile Competence Centre ; 650, route des Lucioles ; F-06921 Sophia-Antipolis Cedex ; France, pages 1 - 128, XP051474969
- "3rd Generation Partnership Project; Technical Specification Group Services and System Aspects; Study on Enhancement to the 5GC LoCation Services (Release 16)", 3GPP STANDARD; TECHNICAL REPORT; 3GPP TR 23.731, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 12 July 2018 (2018-07-12), Mobile Competence Centre ; 650, route des Lucioles ; F-06921 Sophia-Antipolis Cedex ; France, pages 1 - 128, XP051474969

## Description

Priority is claimed to Chinese Patent Application No. 201910717203.5, filed with the China National Intellectual Property Administration on August 5, 2019 and entitled "TERMINAL POSITIONING METHOD, APPARATUS, AND SYSTEM".

### TECHNICAL FIELD

This disclosure relates to the field of mobile communication technologies, and in particular, the invention relates to a terminal positioning method, an apparatus, and a system.

### BACKGROUND

Currently, both a 4G (4th-generation) communication system and a 5G (5th-generation) communication system support network handover (handover), that is, a terminal device may be handed over from a 4G system to a 5G system, or handed over from a 5G system to a 4G system.

In addition, currently, both the 4G system and the 5G system support a location service for the terminal, that is, the 4G system and the 5G system may provide a service of positioning the terminal to a client through a capability exposure interface. For example, the client may send a location request to the terminal through a core network in which the terminal is located. The location request may be used to request location information of the terminal, and the location request may be used to request to obtain the location information of the terminal in real time, or used to request to obtain the location information of the terminal when a specific condition is satisfied. The core network in which the terminal is located reports the location information of the terminal to the client based on the location request, so that the client learns of the location information of the terminal.

However, after the terminal is handed over to a network, there is no solution in a conventional technology to how the network to which the terminal is handed over positions the terminal.

3rd Generation Partnership Project; Technical Specification Group Services and System Aspect; Study on Enhancement to the 5GC LoCation Service - Release 16 relates to a study on enhancement to the 5GC LoCation Services performed by the 3GPP.

CATT : « New solutionm for KI#15: Location continuouty support for N26 based Handovers is a 3GPP contribution which relates to location continuity support for N26 based handovers.

WO 2019/036421 A1 relates to methods and techniques for supporting location services for a user equipment using a location server and service based interfaces and SBI service operations in a 5th Generation wireless network.

### SUMMARY

The object of the present invention is to provide a terminal positioning method, an apparatus, and a system, to ensure continuity of a location service for a terminal after the terminal is handed over to a network. This object is solved by the attached independent claims and further embodiments and improvements of the invention are listed in the attached dependent claims.

According to a first aspect according to the invention, a terminal positioning method for maintaining continuity of a location service for a terminal after the terminal is handed over between two networks is provided. The method includes steps performed by a network mobile location center.

According to a second aspect according to the invention, a terminal positioning method for maintaining continuity of a location service for a terminal after the terminal is handed over between two networks is provided. The method includes steps performed by a capability exposure network element

According to a third aspect according to the invention, a network mobile location center which performs the method of the first aspect is provided.

According to a fourth aspect according to the invention, a capability exposure network element which performs the method of the second aspect is provided.

According to a fifth aspect according to the invention, a system comprising a mobility management network element of a first network and a network mobile location center according to the third aspect is provided.

According to a sixth aspect according to the invention, a system comprising a capability exposure network element of a first network and a capability exposure network element according to the fourth aspect is provided.

According to a seventh computer-readable storage media are provided

According to a not claimed aspect, an embodiment of this application provides a computer program product including instructions. When the computer program product runs on a computer, the computer is enabled to perform the methods according to the foregoing aspects.

According to another not claimed aspect, this application provides a chip system. The chip system includes a processor, configured to support the foregoing apparatus in implementing functions in the foregoing aspects, for example, processing information in the foregoing methods. In a possible design, the chip system further includes a memory, and the memory is configured to store program instructions and data that are necessary for a data sending device. The chip system may include a chip, or may include a chip and another discrete device.

### BRIEF DESCRIPTION OF DRAWINGS

FIG. 1a is a schematic diagram of a system architecture according to an embodiment of this application;
FIG. 1b is a schematic diagram of another system architecture according to an embodiment of this application;
FIG. 1c is a schematic diagram of still another system architecture according to an embodiment of this application;
FIG. 2 is a schematic diagram of a system architecture according to an embodiment of this application;
FIG. 3 is a schematic diagram of a structure of a communication apparatus according to an embodiment of this application;
FIG. 4 is a schematic flowchart 1 of a terminal positioning method according to an embodiment of this application;
FIG. 5 is a schematic flowchart 2 of a terminal positioning method according to an embodiment of this application;
FIG. 6 is a schematic flowchart 3 of a terminal positioning method according to an embodiment of this application;
FIG. 7 is a schematic flowchart 4 of a terminal positioning method according to an embodiment of this application;
FIG. 8 is a schematic flowchart 1 of another terminal positioning method according to an embodiment of this application;
FIG. 9 is a schematic flowchart 2 of another terminal positioning method according to an embodiment of this application;
FIG. 10 is a schematic flowchart 1 of still another terminal positioning method according to an embodiment of this application;
FIG. 11 is a schematic flowchart 2 of still another terminal positioning method according to an embodiment of this application; and
FIG. 12 is a schematic diagram of a structure of a communication apparatus according to this application.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communication system, a 5th generation (5th generation, 5G) system, or a new radio (new radio, NR) system.

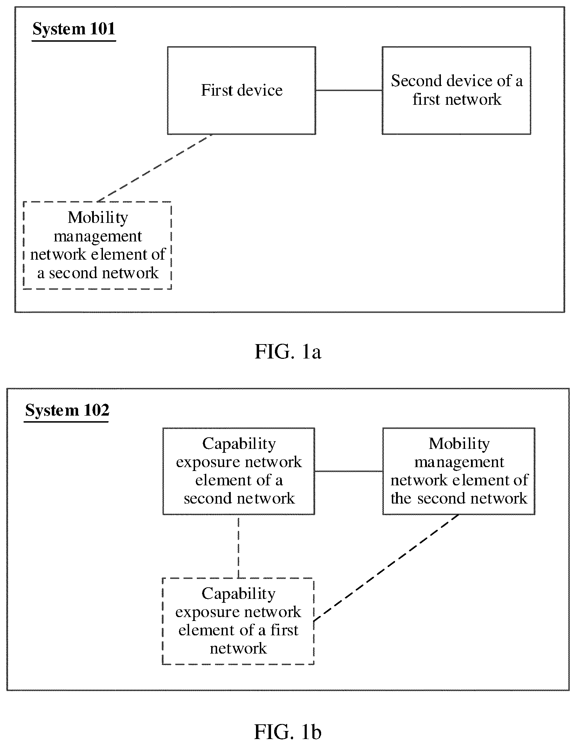

FIG. 1a is a schematic diagram of a system architecture according to an embodiment of this application. As shown in FIG. 1a, the system 101 includes a second device of a first network and a first device, and may further include a mobility management network element of a second network. The system 101 may be configured to perform a terminal positioning method provided in this embodiment of this application.

The second device is configured to send a first indication to the first device, where the first indication is used to indicate that a terminal is to be handed over to the second network. The first device is configured to: obtain an identifier of the mobility management network element of the second network; and send first information to the mobility management network element of the second network, where the first information is used to execute a location service for the terminal.

In a possible implementation, the first device is further configured to access a data management network element, to determine that the terminal has been handed over to the second network.

Optionally, the first device is configured to receive the identifier of the mobility management network element of the second network from the data management network element, to obtain the identifier of the mobility management network element of the second network.

In a possible implementation, the first device is a capability exposure network element of the second network, the second device is a capability exposure network element of the first network, and the capability exposure network element of the first network is further configured to: receive the first indication from a mobility management network element of the first network; and send a second indication to the capability exposure network element of the second network, where the second indication is used to indicate that there is the location service for the terminal.

Optionally, the capability exposure network element of the first network is further configured to: receive a request message of the first information from the capability exposure network element of the second network; and send the first information to the capability exposure network element of the second network.

In a possible implementation, the first device is a network mobile location center, the second device is a mobility management network element of the first network, and the mobility management network element of the first network is further configured to receive the first indication from the terminal.

In a possible implementation, the system 101 further includes the mobility management network element of the second network, where the mobility management network element of the second network is configured to: obtain, based on the first information, location information of the terminal or a location event indicated by the first information; and feed back the location information of the terminal or the location event indicated by the first information to a client. For details, refer to the following terms or concepts.

In a possible implementation, the first information includes any one or more of the following: information used to indicate a triggering event; information used to indicate positioning accuracy; and information used to indicate a reporting periodicity.

In this way, the second device of the first network notifies the first device that the terminal is to be handed over to the second network, and the first device obtains the identifier of the mobility management network element of the second network, and provides, based on the identifier of the mobility management network element of the second network, the first information required for executing the location service for the terminal to the mobility management network element of the second network. Therefore, after the terminal is handed over from the first network to the second network, the second network can still execute the location service for the terminal. This maintains continuity of the location service for the terminal.

FIG. 1b is a schematic diagram of another system architecture according to an embodiment of this application. As shown in FIG. 1b, the system 102 includes a capability exposure network element of a second network and a mobility management network element of the second network, and may further include a capability exposure network element of a first network. The system 102 may be configured to perform another terminal positioning method provided in this embodiment of this application.

The mobility management network element of the second network is configured to receive a second indication from a terminal, where the second indication is used to indicate that there is a location service for the terminal. The capability exposure network element of the second network is configured to: receive a third indication from the mobility management network element of the second network, where the third indication is used to indicate that there is the location service for the terminal from the first network; and send a first notification to the capability exposure network element of the first network, where the first notification includes an identifier of the mobility management network element of the second network and an identifier of the terminal, the first notification is used to indicate to send first information to the mobility management network element of the second network, and the first information is used to execute the location service for the terminal.

In a possible implementation, the system 102 further includes the capability exposure network element of the first network. The capability exposure network element of the first network is configured to send the first information to the mobility management network element of the second network based on the first notification.

Optionally, the capability exposure network element of the first network is further configured to determine that there is the location service for the terminal in the first network.

In a possible implementation, the mobility management network element of the second network is further configured to: obtain, based on the first information, location information of the terminal or a location event indicated by the first information; and feed back the location information of the terminal or the location event indicated by the first information to a client. For details, refer to the following terms or concepts.

In a possible implementation, the first information includes any one or more of the following: information used to indicate a triggering event; information used to indicate positioning accuracy; and information used to indicate a reporting periodicity.

In this way, the mobility management network element of the second network notifies the capability exposure network element of the second network that there is the location service for the terminal from the first network. The capability exposure network element of the second network sends the first notification to the capability exposure network element of the first network, so that the capability exposure network element of the first network provides the first information required for executing the location service for the terminal to the mobility management network element of the second network. Therefore, after the terminal is handed over from the first network to the second network, the second network can still execute the location service for the terminal. This maintains continuity of the location service for the terminal.

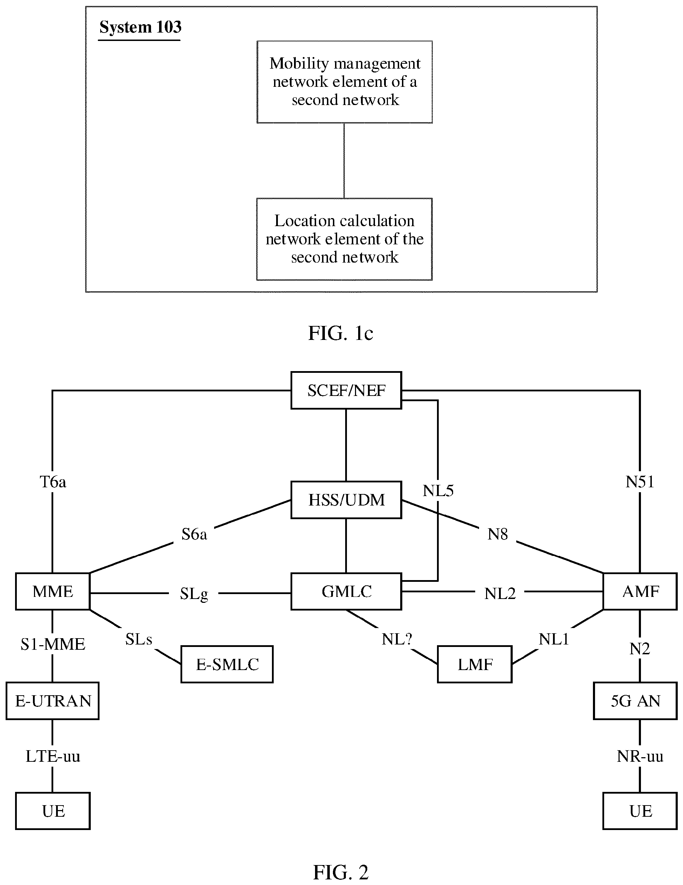

FIG. 1c is a schematic diagram of still another system architecture according to an embodiment of this application. As shown in FIG. 1c, the system 103 includes a mobility management network element of a second network and a location calculation network element of the second network. The system 103 may be configured to perform still another terminal positioning method provided in this embodiment of this application.

The mobility management network element of the second network is configured to receive a second indication and first information from a terminal, where the second indication is used to indicate that there is a location service for the terminal, and the first information is used to execute the location service for the terminal. The location calculation network element of the second network is configured to receive the second indication and the first information from the mobility management network element of the second network.

In a possible implementation, the mobility management network element of the second network is configured to receive the second indication and the first information from the terminal through a base station of the second network.

In a possible implementation, the mobility management network element of the second network is further configured to: obtain, based on the first information, location information of the terminal or a location event indicated by the first information; and feed back the location information of the terminal or the location event indicated by the first information to a client. For details, refer to the following terms or concepts.

In a possible implementation, the location calculation network element of the second network is further configured to: obtain, based on the first information, location information of the terminal or a location event indicated by the first information; and send the location information of the terminal or the location event indicated by the first information to the mobility management network element of the second network. For details, refer to the following terms or concepts.

In a possible implementation, the first information includes any one or more of the following: information used to indicate a triggering event; information used to indicate positioning accuracy; and information used to indicate a reporting periodicity.

In this way, after the terminal is handed over from the first network to the second network, the terminal notifies the mobility management network element of the second network that there is the location service for the terminal, and provides the first information required for executing the location service to the mobility management network element of the second network, and the mobility management network element of the second network further provides the first information to the location calculation network element of the second network, so that after the terminal is handed over from the first network to the second network, the second network can still perform the location service for the terminal. This maintains continuity of the location service for the terminal.

It should be noted that the first network in FIG. 1a, FIG. 1b, and FIG. 1c may be a 5G network, and the second network may be a 4G network. Alternatively, the first network may be a 4G network, and the second network may be a 5G network. Handover between the 4G network and the 5G network is used as an example in this application. However, this is not limited to the 4G network and the 5G network. In FIG. 1a, FIG. 1b, and FIG. 1c, the mobility management network element, the capability exposure network element, the network mobile location center, the location calculation network element, and the like are merely names, and the names do not constitute a limitation on devices. In the 4G network, the 5G network, and another future network, the mobility management network element, the capability exposure network element, the network mobile location center, and the location calculation network element may alternatively have other names. This is not specifically limited in the embodiments of this application. For example, in the 4G network, the mobility management network element may be a mobility management entity (mobility management entity, MME), and in the 5G network, the mobility management network element may be an access and mobility management function (access and mobility management function, AMF). In the 4G network, the capability exposure network element may be a service capability exposure function (service capability exposure function, SCEF), and in the 5G network, the capability exposure network element may be a network exposure function (network exposure function, NEF). The network mobile location center may be a gateway mobile location center (gateway mobile location center, GMLC). In the 4G network, the location calculation network element may be an evolved serving mobile location center (evolved serving mobile location center, E-SMLC), and in the 5G network, the location calculation network element may be a location management function (Location Management Function, LMF). Unified descriptions are provided herein, and are not described below again.

It should be understood that the mobility management network element, the capability exposure network element, the location calculation network element, and the network mobile location center each may be an independent network element, may be jointly implemented by a plurality of network elements, or may be used as a functional module in a network element. This is not specifically limited in the embodiments of this application. The network elements or the functions may be network elements in a hardware device, may be software functions running on dedicated hardware, or may be virtualized functions instantiated on a platform (for example, a cloud platform).

A terminal (terminal) in the embodiments of this application may be a device such as user equipment (user equipment, UE), a mobile station (mobile station, MS), or a mobile terminal (mobile terminal). The terminal can communicate with one or more network devices in one or more communication systems, and accept network services provided by the network devices. For example, the terminal in the embodiments of this application may be a mobile phone (which is also referred to as a "cellular" phone), a computer having a mobile terminal, or the like. Alternatively, the terminal may be a portable, pocket-sized, handheld, computer built-in, or vehicle-mounted mobile apparatus. Alternatively, the terminal may be a communication chip having a communication module. The terminal may be used as an object of a location service and/or a requestor of a location service in the embodiments of this application.

An access network device may include a base station (base station, BS), or include a base station, a radio resource management device configured to control the base station, and the like. The access network device may be a relay station (relay device), an access point, a vehicle-mounted device, a wearable device, a base station in a future 5G network, a base station in a future evolved public land mobile network (public land mobile network, PLMN) network, an NR base station, or the like. This is not limited in the embodiments of this application. Alternatively, the access network device may be a communication chip having a communication module. In an execution process of the method in this application, the access network device may be used as a radio access network (radio access network) base station to provide a wireless network connection to a terminal device 101. For example, the access network device may be used as an access network base station in an evolved universal mobile telecommunications system (universal mobile telecommunications system, UMTS) terrestrial radio access network (evolved UMTS terrestrial radio access network, E-UTRAN) of a 4G access network. Alternatively, the access network device may be used as an access network base station in a 5G RAN of a 5G access network. Alternatively, the access network device may be used as an access network base station in a future wireless communication system.

With reference to FIG. 2, the following describes a system architecture used when the first network is a 5G network, and the second network is a 4G network; or when the first network is a 4G network, and the second network is a 5G network. As shown in FIG. 2, the system 200 includes a terminal (for example, UE), an E-UTRAN, an MME, an E-SMLC, an SCEF, an NEF, a home subscriber server (home subscriber server, HSS), unified data management (unified data management, UDM), a GMLC, an LMF, an AMF, and a 5G RAN.

Main functions of the network elements are described as follows:
The MME may be understood as a name of a mobility management network element in a 4G network. The AMF may be understood as a name of a mobility management network element in a 5G network. The mobility management network element mainly includes the following functions related to access and mobility, for example, connection management, mobility management, registration management, access authentication and authorization, reachability management, and security context management.

The E-SMLC may be understood as a name of a location calculation network element in a 4G network. The LMF may be understood as a name of a location calculation network element in a 5G network. The location calculation network element mainly includes the following functions: processing a location request, interacting with a terminal and an access network to obtain location measurement data, calculating a location of the terminal, and providing the location of the terminal to a requestor.

The SCEF may be understood as a name of a capability exposure network element in a 4G network. The NEF may be understood as a name of a capability exposure network element in a 5G network. The capability exposure network element mainly includes the following functions: securely opening a service and a capability that are provided by a 3GPP network function, such as internally opening or opening to a third party; and converting or translating information exchanged with an application function entity (application function, AF) and information exchanged with an internal network function.

The HSS may be understood as a name of a data management network element in a 4G network. The UDM may be understood as a name of a data management network element in a 5G network. The data management network element mainly includes the following functions: unified data management, authentication credential processing in a 3GPP authentication and key agreement mechanism, user identity processing, access authorization, registration and mobility management, subscription management, short message service management, and the like.

In addition, the system may include a network element co-located between the 4G network and the 5G network, for example, the GMLC, the SCEF/NEF, and the HSS/UDM.

It should be noted that names of the network elements (such as the MME, the AMF, the SCEF, the NEF, the UDM, the HSS, the E-SMLC, the LMF, and the GMLC) included in FIG. 2 are merely names, and the manes does not constitute a limitation on functions of the network elements. In a 5G network and another future network, the foregoing network elements may also have other names. This is not specifically limited in the embodiments of this application. For example, in a 6G network, some or all of the foregoing network elements may still use terms in 5G, or may have other names. Unified descriptions are provided herein, and are not described below again.

With reference to the system shown in FIG. 1a, when the first network is a 5G network, and the second network is a 4G network, the first device may be a GMLC, the second device of the first network may be an AMF, and the mobility management network element of the second network may be an MME. Alternatively, the first device may be an SCEF, the second device of the first network may be an NEF, and the mobility management network element of the second network may be an MME. When the first network is a 4G network, and the second network is a 5G network, the first device may be a GMLC, the second device of the first network may be an MME, and the mobility management network element of the second network may be an AMF. Alternatively, the first device may be an NEF, the second device of the first network may be an SCEF, and the mobility management network element of the second network may be an AMF.

With reference to the system shown in FIG. 1b, when the first network is a 5G network, and the second network is a 4G network, the capability exposure network element of the first network may be an NEF, the mobility management network element of the second network may be an MME, and the capability exposure network element of the second network may be an SCEF. When the first network is a 4G network, and the second network is a 5G network, the capability exposure network element of the first network may be an SCEF, the mobility management network element of the second network may be an AMF, and the capability exposure network element of the second network may be an NEF.

With reference to the system shown in FIG. 1c, when the first network is a 5G network, and the second network is a 4G network, the mobility management network element of the second network may be an MME, and the location calculation network element of the second network may be an E-SMLC. When the first network is a 4G network, and the second network is a 5G network, the mobility management network element of the second network may be an AMF, and the location calculation network element of the second network may be an LMF.

For specific working processes and beneficial effects of the network elements in the systems in FIG. 1a, FIG. 1b, FIG. 1c, and FIG. 2, refer to descriptions in the following method embodiments.

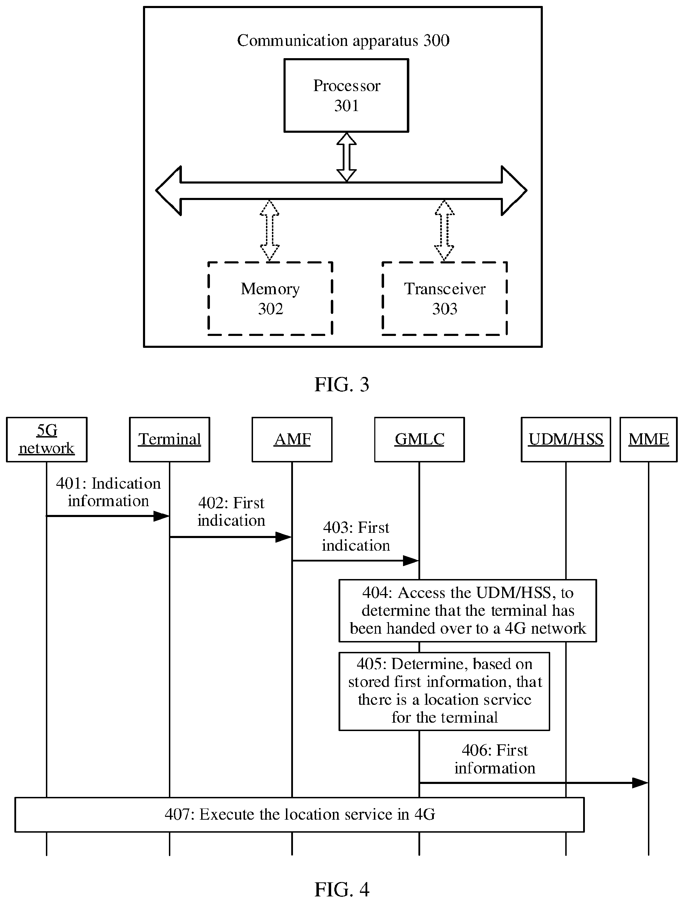

FIG. 3 is a schematic block diagram of a communication apparatus 300 (or a terminal positioning apparatus) according to an embodiment of this application. The first device, the second device of the first network, the data management network element, the mobility management network element of the second network, or the like in FIG. 1a may be implemented by the communication apparatus in FIG. 3. Alternatively, the mobility management network element of the second network, the capability exposure network element of the second network, or the capability exposure network element of the first network in FIG. 1b may be implemented by the communication apparatus in FIG. 3. Alternatively, the mobility management network element of the second network, the location calculation network element of the second network, the base station of the second network, the terminal, or the like in FIG. 1c may be implemented by the communication apparatus in FIG. 3. Alternatively, the MME, the AMF, the SCEF, the NEF, the UDM, the HSS, the E-SMLC, the LMF, the GMLC, or the like in FIG. 2 may be implemented by the communication apparatus in FIG. 3.

It should be understood that the communication apparatus may be a physical device, may be a component (for example, an integrated circuit or a chip) of a physical device, or may be a functional module in a physical device.

As shown in FIG. 3, the communication apparatus includes one or more processors 301. The processor 301 may store executable instructions used to perform the method in the embodiments of this application. Optionally, the processor 301 may invoke an interface to implement receiving and sending functions. The interface may be a logical interface or a physical interface. This is not limited. For example, the interface may be a transceiver circuit or an interface circuit. A transceiver circuit or an interface circuit configured to implement the receiving function and a transceiver circuit or an interface circuit configured to implement the sending function may be separated or may be integrated together. The transceiver circuit or the interface circuit may be configured to read and write code/data; or the transceiver circuit or the interface circuit may be configured to transmit or transfer a signal.

Optionally, the interface may be implemented through a transceiver. Optionally, the communication apparatus 300 may further include a transceiver 303. The transceiver 303 may be referred to as a transceiver unit, a transceiver machine, a transceiver circuit, a transceiver, or the like, and is configured to implement receiving and sending functions.

Optionally, the communication apparatus may further include a memory 302. A specific deployment location of the memory 302 is not specifically limited in this embodiment of this application. The memory may be integrated into the processor, or may be independent of the processor. When the communication apparatus does not include a memory, the communication apparatus only needs to have a processing function, and the memory may be deployed at another location (for example, a cloud system).

The processor 301, the memory 302, and the transceiver 303 communicate with each other through an internal connection path, and transfer control and/or data signals.

It may be understood that, although not shown, the communication apparatus 300 may further include another apparatus, for example, an input apparatus, an output apparatus, or a battery.

Optionally, in some embodiments, the memory 302 may store executable instructions for performing the method in the embodiments of this application. The processor 301 may execute the instructions stored in the memory 302, to complete, in combination with other hardware (for example, the transceiver 303), steps to be performed in the following methods. For specific working processes and beneficial effects, refer to descriptions in the following method embodiments.

The method provided in the embodiments of this application may be applied to the processor 301, or may be implemented by the processor 301. The processor 301 may be an integrated circuit chip and has a signal processing capability. In an implementation process, the steps of the method may be performed through a hardware integrated logical circuit in the processor, or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly performed and completed by a hardware decoding processor, or may be performed and completed by using a combination of hardware and software modules in the decoding processor. A software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

It may be understood that the memory 302 may be a volatile memory or a nonvolatile memory, or may include both a volatile memory and a nonvolatile memory. The nonvolatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these memories and any memory of another proper type.

The communication apparatus 300 may be a general-purpose communication apparatus or a dedicated communication apparatus. During specific implementation, the communication device 300 may be a desktop computer, a portable computer, a network server, a personal digital assistant (personal digital assistant, PDA), a mobile phone, a tablet computer, a wireless terminal device, a communication device, an embedded device, or a device having a structure similar to that in FIG. 3. A type of the communication apparatus 300 is not limited in this embodiment of this application.

In addition, the network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With the evolution of the network architecture and the emergence of new service scenarios, the technical solutions provided in the embodiments of this application are also applicable to similar technical problems.

For ease of understanding, before the terminal positioning method in the embodiments of this application is described, terms or concepts in this application are first briefly described.

The term "and/or" describes an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one (piece) of the following" or a similar expression thereof means any combination of these items, including any combination of singular items (pieces) or plural items (pieces). For example, at least one (piece) of a, b, or c may indicate a, b, c, a and b, a and c, b and c, or a, b, and c, where a, b, and c may be singular or plural. "A plurality of" means two or more, that is, two, three, or more. In addition, to clearly describe the technical solutions in the embodiments of this application, terms such as "first" and "second" are used in the embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference.

A location service in this application refers to a location service (location service, LCS), for a specific terminal, that is provided by a communication network to a client. For example, the communication network receives a location request of the client through a capability exposure network element, and reports location information of a terminal or a location event related to a location to the client based on the location request. For another example, the communication network receives a location request of the client through a network mobile location center, and reports location information of a terminal or a location event related to a location to the client based on the location request. The location service may be a location immediate request (location immediate request, LIR) service or a location deferred request (location deferred request, LDR) service.

The location immediate request service is a location service for "an immediate request and an immediate response". During implementation, the client initiates a location request for a specific terminal, the location request includes an LIR, and a core network in which the terminal is located feeds back location information of the terminal to the client in real time based on the location request.

The location deferred request service is a type of deferred location service. During implementation, the client subscribes to the location service for the terminal from the terminal and the core network in which the terminal is located, and triggers a location report after a specific location event is satisfied. For example, the location event means that the terminal moves out of or moves to an area, or a connection status of the terminal changes (changes from connected to idle or idle to connected), or a moving distance of the terminal reaches a threshold distance, satisfies s a preset reporting periodicity, or the like. The location report may carry the location information of the terminal, and/or may be used to indicate that the foregoing location event is satisfied, for example, indicate that the terminal moves out of or moves to an area.

The location deferred request service can be classified into low-accuracy (lower cell-ID) positioning and high-accuracy (higher cell-ID) positioning. The low-accuracy positioning may be performed by the mobility management network element to determine the location information of the terminal. In this case, the determined location information has relatively low accuracy. The high-accuracy positioning may be performed by the location calculation network element to determine the location information of the terminal. In this case, the determined location information has higher accuracy.

The location information may be cell identifier information of a cell to which the terminal belongs and/or geographical location information of the terminal. The geographical location information of the terminal may be classified into an absolute geographical location and a relative geographical location based on relativity and absoluteness of a geographical location. The relative geographical location is determined by nearby objects of reference points of the relative geographical location, such as land and sea locations (for example, China is located in the east of Asia and on the western coast of the Pacific Ocean). For the absolute geographical position, the entire earth is taken as a reference system, and a longitude and a latitude are taken as a measurement standard. Every place on the earth has a unique longitude/latitude value, which is known as a longitude/latitude location. Based on the location service, the core network in which the terminal is located can obtain the location information of the terminal. Specifically, for example, in the high-accuracy positioning, the mobility management network element may obtain the location information of the terminal from the location calculation network element, and send the location information of the terminal to the network mobile location center. The network mobile location center may feed back the location information of the terminal to the client based on the location request. In the low-accuracy positioning, the mobility management network element may obtain the location information of the terminal, and send the location information of the terminal to the capability exposure network element.

Executing the location service in this application means an operation performed by the terminal, the core network element, or another related network element to implement the location service. It should be noted that, when the location service is executed by the terminal, executing the location service may also mean supporting (support) the location service. When the location service is executed by the mobility management network element, executing the location service may also mean managing (manage) the location service. When the location service is executed by the capability exposure network element, executing the location service may also mean providing (provide) the location service to the client. In the 5G network, an operation of executing the location service by the terminal, an operation of executing the location service by the AMF, an operation of executing the location service by the LMF, an operation of executing the location service by the NEF, an operation of executing the location service by the GMLC, and the like are mainly defined in the 3GPP standard TS23.273. In the 4G network, an operation of executing the location service by the terminal, an operation of executing the location service by the MME, an operation of executing the location service by the E-SMLC, an operation of executing the location service by the SCEF, and the like are mainly defined in the 3GPP standard TS23.271. For example, in the high-accuracy positioning of the 5G network, the terminal monitors the location event, and provides location calculation assistance data to an access network side when the location event occurs, and the LMF interacts with the access network side through the AMF, and exchanges information such as location algorithm capabilities supported by each other, selected location positioning algorithms, and obtained location data. The LMF calculates the location of the terminal based on the location data obtained from the access network and the selected location algorithms, and returns the location information of the terminal to the AMF. The AMF sends the location information of the terminal to the GMLC, and the GMLC sends the location information to the client that subscribes to the location service. In the low-accuracy positioning of the 5G network, the terminal receives a request message of the location service and authenticates the client that subscribes to the location service, the AMF obtains the location of the terminal and sends the location information of the terminal to the NEF, and the NEF sends the location information to the client. In the high-accuracy positioning of the 4G network, the terminal monitors the location event, and provides location calculation assistance data to an access network side when the location event occurs, and the E-SMLC interacts with the access network side through the MME, and exchanges information such as location algorithm capabilities supported by each other, selected location positioning algorithms, and obtained location data. The E-SMLC calculates the location of the terminal based on the location data obtained from the access network and the selected location algorithms, and returns the location information of the terminal to the MME. The MME sends the location information of the terminal to the GMLC, and the GMLC sends the location information to the client that subscribes to the location service. In the low-accuracy positioning of the 4G network, the terminal receives a request message of the location service and authenticates the client that subscribes to the location service, the MME obtains the location of the terminal and sends the location information of the terminal to the SCEF, and the SCEF sends the location information to the client.

In this application, the client is a communication device that requests a core network to provide a location service for a specific terminal. The client may be a terminal device, a server, or a network element in a wireless communication network, or has another carrier.

FIG. 4 is a schematic flowchart of a terminal positioning method according to an embodiment of this application. The method may be applied to the system shown in FIG. 1a. For example, the first network is a 5G network, the second network is a 4G network, the first device is a GMLC, and the second device of the first network is an AMF.

S401: When registering with the 5G network, a terminal receives indication information from the 5G network, and learns that the current 5G network does not support handover of an N26 interface.

The N26 interface is an interface between the AMF and an MME.

S402: The terminal determines to be handed over from the 5G network to the 4G network, and sends a first indication to the AMF before the handover, and the AMF receives the first indication from the terminal. The first indication is used to indicate that the terminal is to be handed over to the 4G network.

The first indication may be an indication (indication 1) negotiated between a sender and a receiver of the first indication, may be a bit with a preset value, or may be a preset information element, in a message, that can indicate that the terminal is to be handed over to the 4G network. It should be understood that any information, information element, or message that can indicate that the terminal is to be handed over to the 4G network may be the first indication in this embodiment of this application. A specific form of the first indication is not limited in this application.

In an example, the terminal sends the first indication to the AMF by using non-access stratum (non-access stratum, NAS) signaling.

S403: The AMF sends the first indication to the GMLC, and the GMLC receives the first indication from the AMF. That is, the AMF notifies the GMLC that the terminal is to be handed over to the 4G network.

In an example, the AMF sends the first indication to the GMLC by using an LDR handover notification (LDR handover notify).

S404: The GMLC accesses UDM/an HSS, to determine that the terminal has been handed over to the 4G network.

Specifically, the GMLC accesses the UDM/HSS, to check whether the terminal has been handed over to the 4G network. If the terminal is handed over to the 4G network, the UDM/HSS returns an identifier of the MME to the GMLC, and the GMLC receives the identifier of the MME from the UDM/HSS.

The identifier of the MME may be any identifier that can uniquely identify the MME, for example, may be information such as an identifier (identifier, ID) of the MME or an address (address) of the MME.

If the UDM/HSS does not return the identifier of the MME to the GMLC, the GMLC repeatedly accesses the UDM/HSS after a period of time (for example, a timer (timer)), for example, the GMLC accesses the UDM/HSS for a plurality of times (for example, a maximum number (maximum number)). If the GMLC still does not receive the identifier of the MME from the UDM/HSS, it is determined by default that the terminal is unsuccessfully handed over to the 4G network. The timer and the maximum number may be preconfigured. This is not limited in this application.

In an example, the GMLC accesses the UDM/HSS by using an Nudm_UCEM_GET message, and the UDM/HSS returns the identifier of the MME by using the Nudm_UCEM_GET message.

S405: The GMLC determines, based on stored first information, that there is a location service for the terminal.

Specifically, because the GMLC is a network element shared by 4G and 5G, in the 5G network, a client subscribes to the location service for the terminal from the GMLC, and the GMLC stores the first information required for executing the location service. Therefore, based on the stored first information, the GMLC can determine that there is the location service for the terminal.

The first information includes information required for executing the location service. For example, when the location service is an LDR service, the first information may include LDR request information (LDR request information). The LDR request information may be included in a location request of the LDR service, and the location request of the LDR service may be sent by the client to the 5G network when the client requests to provide the LDR service for the specific terminal. Specifically, the information required for executing the location service is some or all of information used to indicate a triggering event, information used to indicate positioning accuracy, or information used to indicate a reporting periodicity. The triggering event is an event that triggers sending of a location report to the client. For example, the terminal moves out of or moves to an area, or a moving distance of the terminal reaches a threshold distance. When the location event is satisfied, a core network triggers the sending of the location report to the client. The positioning accuracy is used to describe accuracy of positioning the terminal. The reporting periodicity refers to a periodicity during which location information of the terminal is sent to the client based on a specific periodicity. When the periodicity expires, the core network triggers the sending of the location report to the client.

S406: The GMLC sends the first information to the MME, and the MME receives the first information from the GMLC. The first information is used to execute the location service for the terminal.

In an example, the GMLC sends the first information to the MME by using an LDR handover notification.

Through this step, the location service for the terminal is resubscribed in the 4G network.

It should be noted that the positioning accuracy and a request delay that are supported in the 4G network (for example, time between a moment at which the client requests the location service and a moment at which the client receives the location information of the terminal) are different from those supported in 5G, so that the GMLC may perform specific conversion on the first information, and send the converted first information to the MME. This is not limited in this application.

S407: Execute the location service in 4G.

The MME obtains, based on the first information, the location information of the terminal or a location event indicated by the first information, and feeds back the location information of the terminal or the location event indicated by the first information to the client.

Specifically, for an operation of executing the location service in 4G by the terminal, an operation of executing the location service by the MME, an operation of executing the location service by the E-SMLC, and the like, refer to the 3GPP standard TS23.271; and for an operation of executing the location service by the GMLC, refer to the 3GPP standard TS23.273. For example, the terminal monitors the location event, and provides location calculation assistance data to an access network side when the location event occurs, and the E-SMLC interacts with the access network side through the MME, and exchanges information such as location algorithm capabilities supported by each other, selected location positioning algorithms, and obtained location data. The E-SMLC calculates the location of the terminal based on the location data obtained from the access network and the selected location algorithms, and returns the location information of the terminal to the MME. The MME sends the location information of the terminal to the GMLC, and the GMLC sends the location information to the client that subscribes to the location service.

According to the foregoing method, before the terminal is handed over from the 5G network to the 4G network, the terminal indicates, to the AMF, that the terminal is to be handed over to the 4G network, and the AMF indicates, to the GMLC, that the terminal is to be handed over to the 4G network, so that the GMLC obtains the identifier of the MME and provides, to the MME, the first information required for executing the location service. In this way, after the terminal is handed over from 5G to 4G, the 4G network can still execute the location service for the terminal. This maintains continuity of the location service for the terminal.

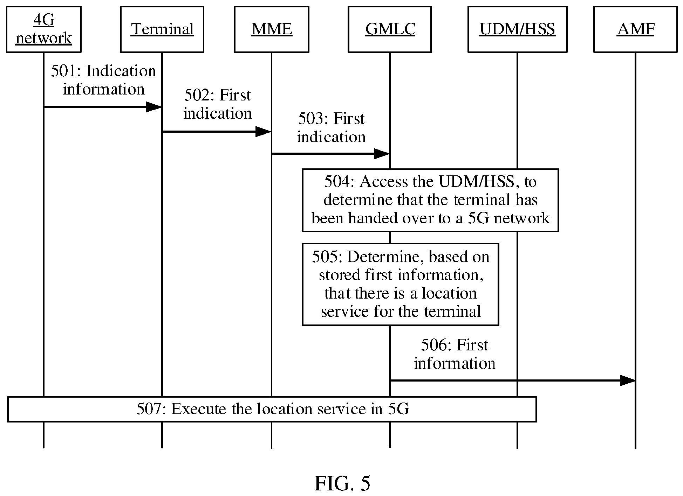

FIG. 5 is a schematic flowchart of a terminal positioning method according to an embodiment of this application. The method may be applied to the system shown in FIG. 1a. For example, the first network is a 4G network, the second network is a 5G network, the first device is a GMLC, and the second device of the first network is an MME.

S501: When registering with the 4G network, a terminal receives indication information of the 4G network, and learns that the current 4G network does not support handover of an N26 interface.

N26 is an interface between the MME and an AMF.

S502: The terminal determines to be handed over from the 4G network to the 5G network, and sends a first indication to the MME before the handover, and the MME receives the first indication from the terminal. The first indication is used to indicate that the terminal is to be handed over to the 5G network.

The first indication may be an indication (indication 1) negotiated between a sender and a receiver of the first indication, may be a bit with a preset value, or may be a preset information element, in a message, that can indicate that the terminal is to be handed over to the 5G network. It should be understood that any information, information element, or message that can indicate that the terminal is to be handed over to the 5G network may be the first indication in this embodiment of this application. A specific form of the first indication is not limited in this application.

In an example, the terminal sends the first indication to the MME by using NAS signaling.

S503: The MME sends the first indication to the GMLC, and the GMLC receives the first indication from the MME. That is, the MME notifies the GMLC that the terminal is to be handed over to the 5G network.

In an example, the MME sends the first indication to the GMLC by using an LDR handover notification.

S504: The GMLC accesses UDM/an HSS, to determine that the terminal has been handed over to the 5G network.

Specifically, the GMLC accesses the UDM/HSS, to check whether the terminal has been handed over to the 5G network. If the terminal is handed over to the 5G network, the UDM/HSS returns an identifier of the AMF to the GMLC, and the GMLC receives the identifier of the AMF from the UDM/HSS.

The identifier of the AMF may be any identifier that can uniquely identify the AMF, for example, may be information such as an ID of the AMF or an address of the AMF.

If the UDM/HSS does not return the identifier of the AMF to the GMLC, the GMLC repeatedly accesses the UDM/HSS after a period of time (for example, a timer), for example, the GMLC accesses the UDM/HSS for a plurality of times (for example, a maximum number). If the GMLC still does not receive the identifier of the AMF from the UDM/HSS, it is determined by default that the terminal is unsuccessfully handed over to the 5G network. The timer and the maximum number may be preconfigured. This is not limited in this application.

In an example, the GMLC accesses the UDM/HSS by using an Nudm_UCEM_GET message, and the UDM/HSS returns the identifier of the AMF by using the Nudm_UCEM_GET message.

S505: The GMLC determines, based on stored first information, that there is a location service for the terminal.

Specifically, because the GMLC is a network element shared by 4G and 5G, in the 4G network, a client subscribes to the location service for the terminal from the GMLC, and the GMLC stores the first information required for executing the location service. Therefore, based on the stored first information, the GMLC can determine that there is the location service for the terminal.

S506: The GMLC sends the first information to the AMF, and the AMF receives the first information from the GMLC. The first information is used to execute the location service for the terminal.

For descriptions of the first information, refer to S405. Details are not described herein.

In an example, the GMLC sends the first information to the AMF by using an LDR handover notification.

Through this step, the location service for the terminal is resubscribed in the 5G network.

It should be noted that the positioning accuracy and a request delay that are supported in the 5G network (for example, time between a moment at which the client requests the location service and a moment at which the client receives the location information of the terminal) are different from those supported in 4G, so that the GMLC may perform specific conversion on the first information, and send the converted first information to the AMF. This is not limited in this application.

S507: Execute the location service in 5G.

The AMF obtains, based on the first information, the location information of the terminal or a location event indicated by the first information, and feeds back the location information of the terminal or the location event indicated by the first information to the client.

Specifically, for an operation of executing the location service in 5G by the terminal, an operation of executing the location service by the AMF, an operation of executing the location service by the LMF, an operation of executing the location service by the GMLC, and the like, refer to the 3GPP standard TS23.273. For example, the terminal monitors the location event, and provides location calculation assistance data to an access network side when the location event occurs, and the LMF interacts with the access network side through the AMF, and exchanges information such as location algorithm capabilities supported by each other, selected location positioning algorithms, and obtained location data. The LMF calculates a location of the terminal based on the location data obtained from the access network and the selected location algorithms, and returns the location information of the terminal to the AMF. The AMF sends the location information of the terminal to the GMLC, and the GMLC sends the location information to the client that subscribes to the location service.

According to the foregoing method, before the terminal is handed over from the 4G network to the 5G network, the terminal indicates, to the MME, that terminal is to be handed over to the 5G network, and the MME indicates, to the GMLC, that the terminal is to be handed over to the 5G network, so that the GMLC obtains the identifier of the AMF and provides, to the AMF, the first information required for executing the location service. In this way, after the terminal is handed over from 4G to 5G, the 5G network can still execute the location service for the terminal. This maintains continuity of the location service for the terminal.

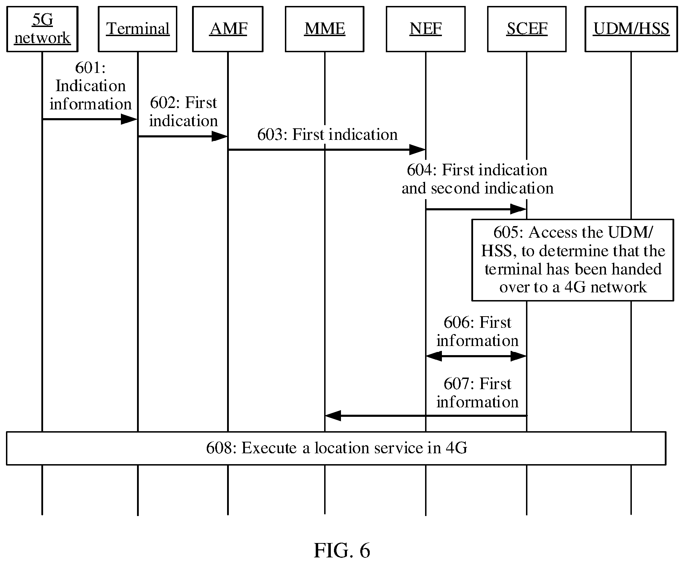

FIG. 6 is a schematic flowchart of a terminal positioning method according to an embodiment of this application. The method may be applied to the system shown in FIG. 1a. For example, the first network is a 5G network, the second network is a 4G network, the first device is an SCEF, and the second device of the first network is an NEF.

S601: When registering with the 5G network, a terminal receives indication information from the 5G network, and learns that the current 5G network does not support handover of an N26 interface.

The N26 interface is an interface between an AMF and an MME.

S602: The terminal determines to be handed over from the 5G network to the 4G network, and sends a first indication to the AMF before the handover, and the AMF receives the first indication from the terminal. The first indication is used to indicate that the terminal is to be handed over to the 4G network.

For descriptions of the first indication, refer to S402. Details are not described herein.

In an example, the terminal sends the first indication to the AMF by using NAS signaling.

S603: The AMF sends the first indication to the NEF, and the NEF receives the first indication from the AMF. That is, the AMF notifies the NEF that the terminal is to be handed over to the 4G network.

In an example, the AMF sends the first indication to the NEF by using an LDR handover notification.

S604: The NEF sends the first indication to the SCEF, and the SCEF receives the first indication from the NEF. That is, the NEF notifies the SCEF that the terminal is to be handed over to the 4G network.

In an example, the NEF further sends a second indication to the SCEF, and the SCEF receives the second indication from the NEF. The second indication is used to indicate that there is a location service for the terminal.

The second indication may be an indication (indication 2) negotiated between a sender and a receiver of the second indication, may be a bit with a preset value, or may be a preset information element, in a message, that can indicate that there is the location service for the terminal. It should be understood that any information, information element, or message that can indicate that there is the location service for the terminal may be the second indication in this embodiment of this application. A specific form of the second indication is not limited in this application. It should be understood that the first indication and the second indication may be a same indication or different indications. For example, the first indication may not only indicate that the terminal is to be handed over to the 4G network, but also indicate that there is the location service for the terminal. This is not limited in this application.

In an example, the NEF sends the first indication to the SCEF by using an LDR handover notification, or sends the first indication and the second indication to the SCEF by using the LDR handover notification.

S605: The SCEF accesses UDM/an HSS, to determine that the terminal has been handed over to the 4G network.

Specifically, the SCEF accesses the UDM/HSS, to check whether the terminal has been handed over to the 4G network. If the terminal is handed over to the 4G network, the UDM/HSS returns an identifier of the MME to the SCEF, and the SCEF receives the identifier of the MME from the UDM/HSS.

The identifier of the MME may be any identifier that can uniquely identify the MME, for example, may be information such as an ID of the MME or an address of the MME.

If the UDM/HSS does not return the identifier of the MME to the SCEF, the SCEF repeatedly accesses the UDM/HSS after a period of time (for example, a timer), for example, the SCEF accesses the UDM/HSS for a plurality of times (for example, a maximum number). If the SCEF still does not receive the identifier of the MME from the UDM/HSS, it is determined by default that the terminal is unsuccessfully handed over to the 4G network. The timer and the maximum number may be preconfigured. This is not limited in this application.

In an example, the SCEF accesses the UDM/HSS by using an Nudm_UCEM_GET message, and the UDM/HSS returns the identifier of the MME by using the Nudm_UCEM_GET message.

S606: The SCEF sends a request message of first information to the NEF, and the NEF returns the first information to the SCEF.

The request message of the first information includes an identifier of the terminal and a location correlation identifier. Specifically, the NEF determines, based on the identifier of the terminal and the location correlation identifier, the first information requested by the SCEF, and returns the first information to the SCEF.

The identifier of the terminal may be any information that can uniquely identify the terminal, for example, may be information such as an IP address of the terminal, an international mobile subscriber identification number (international mobile subscriber identification number, IMSI) of the terminal, a temporary mobile subscriber identity (temporary mobile subscriber identity, TMSI) of the terminal, a globally unique temporary UE identity (globally unique temporary UE identity, GUTI) of the terminal, a domain name of the terminal, or a subscription permanent identifier (subscription permanent identifier, SUPI) of the terminal.

The location correlation identifier may be any information that can uniquely identify the location service, for example, may be information such as a location correlation identifier (location correlation ID).

In an example, the request message of the first information is an LDR request information get (LDR request information get) message, and the NEF returns the first information to the SCEF by using an LDR request information get response (LDR request information get response) message.

S607: The SCEF sends the first information to the MME, and the MME receives the first information from the SCEF.

For descriptions of the first information, refer to S405. Details are not described herein.

In an example, the SCEF sends the first information to the MME by using an LDR handover notification.

Through this step, the location service for the terminal is resubscribed in the 4G network.

It should be noted that the positioning accuracy and a request delay that are supported in the 4G network (for example, time between a moment at which the client requests the location service and a moment at which the client receives location information of the terminal) are different from those supported in 5G, the SCEF may perform specific conversion on the first information, and send the converted first information to the MME. This is not limited in this application.

S608: Execute the location service in 4G.

The MME obtains, based on the first information, the location information of the terminal or a location event indicated by the first information, and feeds back the location information of the terminal or the location event indicated by the first information to the client.

Specifically, for an operation of executing the location service in 4G by the terminal, an operation of executing the location service by the MME, an operation of executing the location service by the SCEF, and the like, refer to the 3GPP standard TS23.271. For example, the terminal receives a request message of the location service and authenticates the client that subscribes to the location service, the MME obtains a location of the terminal and sends the location information of the terminal to the SCEF, and the SCEF sends the location information to the client.

According to the foregoing method, before the terminal is handed over from the 5G network to the 4G network, the terminal indicates, to the AMF, that the terminal is to be handed over to the 4G network, the AMF indicates, to the NEF, that the terminal is to be handed over to the 4G network, and the NEF indicates, to the SCEF, that the terminal is to be handed over to the 4G network and that there is the location service for the terminal, and provides, to the SCEF, the first information required for executing the location service, so that the SCEF sends the first information to the MME. In this way, after the terminal is handed over from 5G to 4G, the 4G network can still execute the location service for the terminal. This maintains continuity of the location service for the terminal.

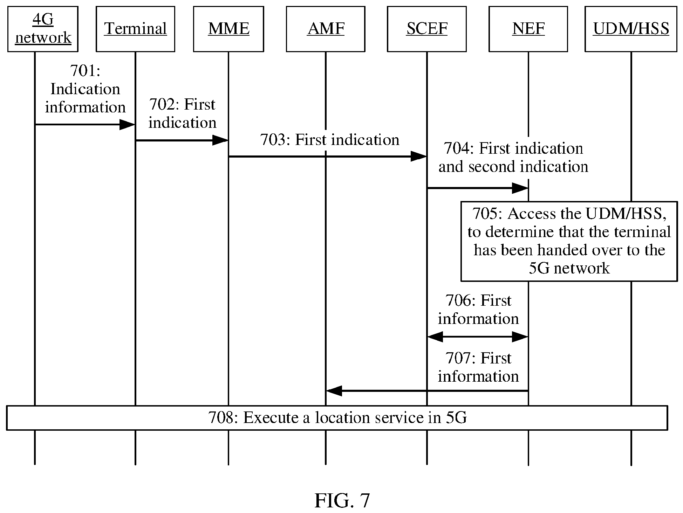

FIG. 7 is a schematic flowchart of a terminal positioning method according to an embodiment of this application. The method may be applied to the system shown in FIG. 1a. For example, the first network is a 4G network, the second network is a 5G network, the first device is an NEF, and the second device of the first network is an SCEF.

S701: When registering with the 4G network, a terminal receives indication information from the 4G network, and learns that the current 4G network does not support handover of an N26 interface.

The N26 interface is an interface between an AMF and an MME.

S702: The terminal determines to be handed over from the 4G network to the 5G network, and sends a first indication to the MME before the handover, and the MME receives the first indication from the terminal. The first indication is used to indicate that the terminal is to be handed over to the 5G network.

For descriptions of the first indication, refer to S502. Details are not described herein.

In an example, the terminal sends the first indication to the MME by using NAS signaling.

S703: The MME sends the first indication to the SCEF, and the SCEF receives the first indication from the MME. That is, the MME notifies the SCEF that the terminal is to be handed over to the 5G network.

In an example, the MME sends the first indication to the SCEF by using an LDR handover notification.

S704: The SCEF sends the first indication to the NEF, and the NEF receives the first indication from the SCEF. That is, the SCEF notifies the NEF that the terminal is to be handed over to the 5G network.

In an example, the SCEF further sends a second indication to the NEF, and the NEF receives the second indication from the SCEF. The second indication is used to indicate that there is a location service for the terminal.

For descriptions of the second indication, refer to S604.

In an example, the SCEF sends the first indication to the NEF by using an LDR handover notification, or sends the first indication and the second indication to the NEF by using the LDR handover notification.

S705: The NEF accesses UDM/an HSS, to determine that the terminal has been handed over to the 5G network.

Specifically, the NEF accesses the UDM/HSS, to check whether the terminal has been handed over to the 5G network. If the terminal is handed over to the 5G network, the UDM/HSS returns an identifier of the AMF to the NEF, and the NEF receives the identifier of the AMF from the UDM/HSS.

The identifier of the AMF may be any identifier that can uniquely identify the AMF, for example, may be information such as an ID of the AMF or an address of the AMF.

If the UDM/HSS does not return the identifier of the AMF to the NEF, the NEF repeatedly accesses the UDM/HSS after a period of time (for example, a timer), for example, the NEF accesses the UDM/HSS for a plurality of times (for example, a maximum number). If the NEF still does not receive the identifier of the MME from the UDM/HSS, it is determined by default that the terminal is unsuccessfully handed over to the 5G network. The timer and the maximum number may be preconfigured. This is not limited in this application.

In an example, the NEF accesses the UDM/HSS by using an Nudm_UCEM_GET message, and the UDM/HSS returns the identifier of the AMF by using the Nudm_UCEM_GET message.

S706: The NEF sends a request message of first information to the SCEF, and the SCEF returns the first information to the NEF.

The request message of the first information includes an identifier of the terminal and a location correlation identifier. Specifically, the SCEF determines, based on the identifier of the terminal and the location correlation identifier, the first information requested by the NEF, and returns the first information to the NEF.

For descriptions of the identifier of the terminal and the location correlation identifier, refer to S606. Details are not described herein.

In an example, the request of the first information request is an LDR request information get message, and the SCEF returns the first information to the SCEF by using an LDR request information get response message.

S707: The NEF sends the first information to the AMF, and the AMF receives the first information from the NEF.

For descriptions of the first information, refer to S405. Details are not described herein.

In an example, the NEF sends the first information to the AMF by using an LDR handover notification.

Through this step, the location service for the terminal is resubscribed in the 5G network.

It should be noted that the positioning accuracy and a request delay that are supported in the 5G network

(for example, time between a moment at which the client requests the location service and a moment at which the client receives location information of the terminal) are different from those supported in 4G, the NEF may perform specific conversion on the first information, and send the converted first information to the AMF. This is not limited in this application.

S708: Execute the location service in 5G.

The AMF obtains, based on the first information, the location information of the terminal or a location event indicated by the first information, and feeds back the location information of the terminal or the location event indicated by the first information to the client.

Specifically, for an operation of executing the location service in 5G by the terminal, an operation of executing the location service by the AMF, an operation of executing the location service by the NEF, and the like, refer to the 3GPP standard TS23.273. For example, the terminal receives a request message of the location service and authenticates the client that subscribes to the location service, the AMF obtains a location of the terminal and sends the location information of the terminal to the NEF, and the NEF sends the location information to the client.

According to the foregoing method, before the terminal is handed over from the 4G network to the 5G network, the terminal indicates, to the MME, that the terminal is to be handed over to the 5G network, the MME indicates, to the SCEF, that the terminal is to be handed over to the 5G network, and the SCEF indicates, to the NEF, that the terminal is to be handed over to the 5G network and that there is the location service for the terminal, and provides, to the NEF, the first information required for executing the location service, so that the NEF sends the first information to the AMF. In this way, after the terminal is handed over from 4G to 5G, the 5G network can still execute the location service for the terminal. This maintains continuity of the location service for the terminal.

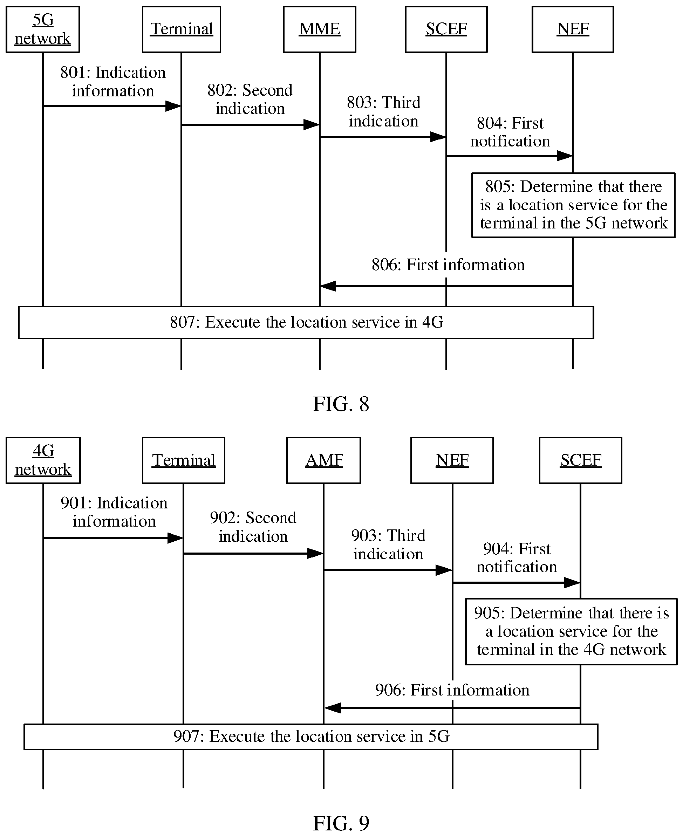

FIG. 8 is a schematic flowchart of a terminal positioning method according to an embodiment of this application. The method may be applied to the system shown in FIG. 1b. For example, the first network is a 5G network, the second network is a 4G network, the capability exposure network element of the second network is an SCEF, and the mobility management network element of the second network is an MME.

S801: When registering with the 5G network, a terminal receives indication information from the 5G network, and learns that the current 5G network does not support handover of an N26 interface.

The N26 interface is an interface between an AMF and the MME.

S802: In a process in which the terminal is handed over from the 5G network to a 4G core network, the terminal sends a second indication to the MME, and the MME receives the second indication from the terminal. The second indication is used to indicate that there is a location service for the current terminal.

For descriptions of the second indication, refer to S604.

In an example, the terminal sends the second indication to the MME by using an attach request (attach request). The MME determines, based on the attach request or the second indication, that the terminal is handed over to the 4G network.

S803: The MME sends a third indication to the SCEF, and the SCEF receives the third indication from the MME. The third indication is used to indicate that there is the location service for the terminal from 5G.

The third indication may be a location service handover indication (indication 3) negotiated by a sender and a receiver of the third indication, may be a bit with a preset value, or may be a preset information element, in a message, that can indicate that there is the location service for the terminal from 5G. It should be understood that any information, information element, or message that can indicate that there is the location service for the terminal from 5G may be the third indication in this embodiment of this application. A specific form of the third indication is not limited in this application. It should be understood that the third indication and the second indication may be a same indication. For example, the second indication may not only indicate that there is the location service for the current terminal, but also indicate that the terminal is from 5G. This is not limited in this application.

In an example, the MME sends the third indication to the SCEF by using an LDR handover notification.

S804: The SCEF sends a first notification to an NEF, and the NEF receives the first notification from the SCEF. The first notification is used to indicate to send first information to the MME, and the first information is used to execute the location service for the terminal.

The first notification includes an identifier of the terminal and an identifier of the MME, and optionally includes the third indication.

For descriptions of the identifier of the terminal, refer to S606. Details are not described herein. The identifier of the MME may be any information that can uniquely identify the MME, for example, may be information such as an ID of the MME or an address of the MME.

In an example, the first notification may be an LDR handover notification.

S805: The NEF determines, based on the first notification, that there is the location service for the terminal in the 5G network.

Specifically, the NEF determines, based on the identifier of the terminal that is included in the first notification, that there is the location service for the terminal in the 5G network.

S806: The NEF sends the first information to the MME based on the identifier of the MME, and the MME receives the first information from the NEF.

For descriptions of the first message, refer to S406. Details are not described herein.

Through this step, the location service for the terminal is resubscribed in the 4G network.

In an example, the NEF sends the first information to the AMF by using an LDR service (configure the LDR service) configuration message.

S807: Execute the location service in 4G.

The MME obtains, based on the first information, location information of the terminal or a location event indicated by the first information, and feeds back the location information of the terminal or the location event indicated by the first information to a client.

Specifically, for an operation of executing the location service in 4G by the terminal, an operation of executing the location service by the MME, and an operation of executing the location service by the SCEF, refer to the 3GPP standard TS23.271. For example, the terminal receives a request message of the location service and authenticates the client that subscribes to the location service, the MME obtains a location of the terminal and sends the location information of the terminal to the SCEF, and the SCEF sends the location information to the client.

According to the foregoing method, in a process in which the terminal is handed over from 5G to 4G, the terminal indicates, to the MME, that there is the location service for the terminal, the MME further notifies the SCEF that there is the location service for the terminal from the 5G network, the SCEF provides the identifier of the MME to the NEF, and the NEF sends, to the MME, the first information required for executing the location service. In this way, after the terminal is handed over from 5G to 4G, the 4G network can still execute the location service for the terminal. This maintains continuity of the location service for the terminal.

FIG. 9 is a schematic flowchart of a terminal positioning method according to an embodiment of this application. The method may be applied to the system shown in FIG. 1b. For example, the first network is a 4G network, the second network is a 5G network, the capability exposure network element of the second network is an NEF, and the mobility management network element of the second network is an AMF.

S901: When registering with the 4G network, a terminal receives indication information from the 4G network, and learns that the current 4G network does not support handover of an N26 interface.

The N26 interface is an interface between an MME and the AMF.

S902: In a process in which the terminal is handed over from the 4G network to the 5G network, the terminal sends a second indication to the AMF, and the AMF receives the second indication from the terminal. The second indication is used to indicate that there is a location service for the current terminal.

For descriptions of the second indication, refer to S604.

In an example, the terminal sends the second indication to the AMF by using an attach request. The AMF determines, based on the attach request or the second indication, that the terminal is handed over to the 5G network.

S903: The AMF sends a third indication to the NEF, and the NEF receives the third indication from the AMF. The third indication is used to indicate that there is the location service for the terminal from 4G.

The third indication may be a location service handover indication (indication 3) negotiated by a sender and a receiver of the third indication, may be a bit with a preset value, or may be a preset information element, in a message, that can indicate that there is the location service for the terminal from 4G. It should be understood that any information, information element, or message that can indicate that there is the location service for the terminal from 4G may be the third indication in this embodiment of this application. A specific form of the third indication is not limited in this application. It should be understood that the third indication and the second indication may be a same indication. For example, the second indication may not only indicate that there is the location service for the current terminal, but also indicate that the terminal is from 4G. This is not limited in this application.

In an example, the AMF sends the third indication to the NEF by using an LDR handover notification.

S904: The NEF sends a first notification to an SCEF, and the SCEF receives the first notification from the NEF. The first notification is used to indicate to send first information to the AMF, and the first information is used to execute the location service for the terminal.

The first notification includes an identifier of the terminal and an identifier of the AMF, and optionally includes the third indication.

For descriptions of the identifier of the terminal, refer to S606. Details are not described herein. The identifier of the AMF may be any information that can uniquely identify the AMF, for example, may be information such as an ID of the AMF or an address of the AMF.

In an example, the first notification may be an LDR handover notification.

S905: The SCEF determines, based on the first notification, that there is the location service for the terminal in the 4G network.

Specifically, the SCEF determines, based on the identifier of the terminal that is included in the first notification, that there is the location service for the terminal in the 4G network.

S906: The SCEF sends the first information to the AMF based on the identifier of the AMF, and the AMF receives the first information from the SCEF.

For descriptions of the first message, refer to S406. Details are not described herein.

Through this step, the location service for the terminal is resubscribed in the 5G network.

In an example, the SCEF sends the first information to the AMF by using an LDR service configuration message.

S907: Execute the location service in 5G.

The AMF obtains, based on the first information, location information of the terminal or a location event indicated by the first information, and feeds back the location information of the terminal or the location event indicated by the first information to a client.

Specifically, for an operation of executing the location service in 5G by the terminal, an operation of executing the location service by the AMF, and an operation of executing the location service by the NEF, refer to the 3GPP standard TS23.273. For example, the terminal receives a request message of the location service and authenticates the client that subscribes to the location service, the AMF obtains a location of the terminal and sends location information of the terminal to the NEF, and the NEF sends the location information to the client.

According to the foregoing method, in a process in which the terminal is handed over from 4G to 5G, the terminal indicates, to the AMF, that there is the location service for the terminal, the AMF further notifies the NEF that there is the location service for the terminal from the 4G network, the NEF provides the identifier of the AMF to the SCEF, and the SCEF sends, to the AMF, the first information required for executing the location service. In this way, after the terminal is handed over from 4G to 5G, the 5G network can still execute the location service for the terminal. This maintains continuity of the location service for the terminal.

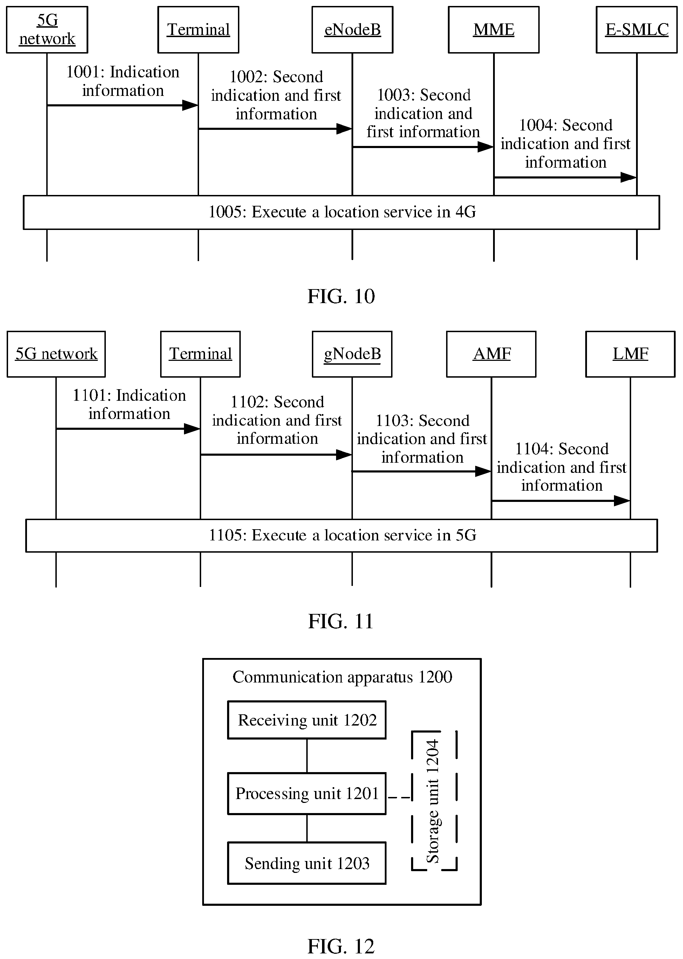

FIG. 10 is a schematic flowchart of a terminal positioning method according to an embodiment of this application. The method may be applied to the system shown in FIG. 1c. For example, the first network is a 5G network, the second network is a 4G network, the mobility management network element of the second network is an MME, and the location calculation network element of the second network is an E-SMLC.

S1001: When registering with the 5G network, a terminal receives indication information from the 5G network, and learns that the current 5G network does not support handover of an N26 interface.

The N26 interface is an interface between an AMF and the MME.

S1002: In a process in which the terminal is handed over from the 5G network to the 4G network, the terminal sends a second indication and first information to an eNodeB, and the eNodeB receives the second indication and the first information from the terminal. The second indication is used to indicate that there is a location service for the current terminal, and the first information is used to execute the location service for the terminal.

For descriptions of the first information, refer to S405. Details are not described herein. For descriptions of the second indication, refer to S604. Details are not described herein.

In an example, the terminal sends the second indication and the first information to the eNodeB by using NAS signaling.

S1003: The eNodeB sends the second indication and the first information to the MME, and the MME receives the second indication and the first information from the eNodeB.

In an example, the eNodeB sends the second indication and the first information to the MME by using an attach request.

S1004: The MME sends the second indication and the first information to the E-SMLC, and the E-SMLC receives the second indication and the first information from the MME.

In an example, the MME may send the second indication and the first information to the E-SMLC by using an LDR handover notification.

S1005: Execute the location service in 4G.

Specifically, for an operation of executing the location service in 4G by the terminal, an operation of executing the location service by the MME, and an operation of executing the location service by the E-SMLC, refer to the 3GPP standard TS23.271. For example, the terminal monitors a location event, and provides location calculation assistance data to an access network side when the location event occurs, and the E-SMLC interacts with the access network side through the MME, and exchanges information such as location algorithm capabilities supported by each other, selected location positioning algorithms, and obtained location data. The E-SMLC calculates a location of the terminal based on the location data obtained from the access network and the selected location algorithms, and returns location information of the terminal to the MME. The MME sends the location information of the terminal to a GMLC, and the GMLC sends the location information to a client that subscribes to the location service.

According to the foregoing method, in a process in which the terminal is handed over from 5G to 4G, the terminal indicates, to the MME, that there is the location service for the terminal, and provides the first information required for executing the location service for the terminal, and the MME provides the first information to the location calculation network element. In this way, after the terminal is handed over from 5G to 4G, the 4G network can still execute the location service for the terminal. This maintains continuity of the location service for the terminal.

FIG. 11 is a schematic flowchart of a terminal positioning method according to an embodiment of this application. The method may be applied to the system shown in FIG. 1c. For example, the first network is a 4G network, the second network is a 5G network, the mobility management network element of the second network is an AMF, and the location calculation network element of the second network is an LMF.

S1101: When registering with the 4G network, a terminal receives indication information from the 4G network, and learns that the current 4G network does not support handover of an N26 interface.

The N26 interface is an interface between an MME and the AMF.

S1102: In a process in which the terminal is handed over from the 4G network to the 5G network, the terminal sends a second indication and first information to a gNodeB, and the gNodeB receives the second indication and the first information from the terminal. The second indication is used to indicate that there is a location service for the current terminal, and the first information is used to execute the location service for the terminal.

For descriptions of the first information, refer to S405. Details are not described herein. For descriptions of the second indication, refer to S604. Details are not described herein.

In an example, the terminal sends the second indication and the first information to the gNodeB by using NAS signaling.

S1103: The gNodeB sends the second indication and the first information to the AMF, and the AMF receives the second indication and the first information from the gNodeB.

In an example, the gNodeB sends the second indication and the first information to the AMF by using an attach request.

S1104: The AMF sends the second indication and the first information to the LMF, and the LMF receives the second indication and the first information from the AMF.

In an example, the AMF may send the second indication and the first information to the LMF by using an LDR handover notification.

S1105: Execute the location service in 5G.

Specifically, for an operation of executing the location service in 5G by the terminal, an operation of executing the location service by the AMF, and an operation of executing the location service by the LMF, refer to the 3GPP standard TS23.273. For example, the terminal monitors a location event, and provides location calculation assistance data to an access network side when the location event occurs, and the LMF interacts with the access network side through the AMF, and exchanges information such as location algorithm capabilities supported by each other, selected location positioning algorithms, and obtained location data. The LMF calculates a location of the terminal based on the location data obtained from the access network and the selected location algorithms, and returns location information of the terminal to the AMF. The AMF sends the location information of the terminal to a GMLC, and the GMLC sends the location information to a client that subscribes to the location service.

According to the foregoing method, in a process in which the terminal is handed over from 4G to 5G, the terminal indicates, to the AMF, that there is the location service for the terminal, and provides the first information required for executing the location service for the terminal, and the AMF provides the first information to the location calculation network element. In this way, after the terminal is handed over from 4G to 5G, the 5G network can still execute the location service for the terminal. This maintains continuity of the location service for the terminal.

It should be understood that the examples in FIG. 4 to FIG. 11 in the embodiments of this application are merely intended to help a person skilled in the art understand the embodiments of this application, but are not intended to limit the embodiments of this application to specific scenarios shown in the examples. Clearly, a person skilled in the art can make various modifications or changes based on the examples in FIG. 4 to FIG. 11, and such modifications or changes also fall within the scope of the embodiments of this application.

It should be further understood that the examples in FIG. 4 to FIG. 11 in the embodiments of this application are merely examples for description, and the examples in the figures do not limit execution sequences. A person skilled in the art can flexibly adjust sequences of the steps based on the examples in the figures. In addition, sequence numbers of the foregoing processes do not mean execution sequences. The execution sequences of the processes should be determined based on functions and internal logic of the processes.

It should be further understood that the solutions in the embodiments of this application may be combined or separately used, and explanations or descriptions of the terms in the embodiments may be cited or explained in the embodiments. This is not limited.

The foregoing describes the terminal positioning method provided in the embodiments of this application, and the following describes an apparatus provided in the embodiments of this application. It should be understood that the technical features described in the method embodiments are also applicable to the following apparatus embodiments.

FIG. 12 is a schematic diagram of a structure of a communication apparatus 1200 according to an embodiment of this application. The communication apparatus 1200 includes a processing unit 1201, a sending unit 1202, and a receiving unit 1203, and optionally further includes a storage unit 1204. The sending unit 1202 and the receiving unit 1203 may be a same unit, for example, a communication unit.

The processing unit 1201 is configured to control actions of the foregoing network elements, for example, support the foregoing network elements in performing the methods and the steps provided in the embodiments of this application. The sending unit 1202 is configured to support the network elements in sending information to another network entity, for example, a step in which the network elements send information to another network entity in the embodiments of this application. The receiving unit 1203 is configured to support the network elements in receiving information sent by another network entity, for example, a step in which the network elements receive information sent by another network entity in the embodiments of this application. The storage unit 1204 is configured to store data and code of the foregoing network elements.

Specifically, the communication apparatus 1200 may be any network element in this application, and may implement a function that can be implemented by the network element. It should be understood that the communication apparatus 1200 may be a physical device, may be a component (for example, an integrated circuit or a chip) of a physical device, or may be a functional unit in a physical device.

For example, the communication apparatus 1200 may be configured to implement a function of the first device described in this specification. For example, the communication apparatus 1200 may be the first device, may be a component (for example, an integrated circuit or a chip) in the first device, or may be a functional unit.

In an example, the processing unit 1201 is configured to: obtain a first indication from a first network, where the first indication is used to indicate that a terminal is to be handed over to a second network; and obtain an identifier of a mobility management network element of the second network; and
the sending unit 1202 is configured to send first information to the mobility management network element of the second network, where the first information is used to execute a location service for the terminal.

Optionally, the processing unit 1201 is further configured to access a data management network element, to determine that the terminal has been handed over to the second network.

Optionally, the receiving unit 1203 is configured to receive the identifier of the mobility management network element of the second network from the data management network element.

Optionally, when the first device is a capability exposure network element of the second network, the receiving unit 1203 is configured to receive the first indication from a capability exposure network element of the first network.

Optionally, when the first device is a capability exposure network element of the second network, the receiving unit 1203 is further configured to receive a second indication from the first network, where the second indication is used to indicate that there is the location service for the terminal.

Optionally, when the first device is a capability exposure network element of the second network, the sending unit 1202 is further configured to send a request message of the first information to a capability exposure network element of the first network; and the receiving unit 1203 is further configured to receive the first information from the capability exposure network element of the first network.

Optionally, when the first device is a network mobile location center, the receiving unit is configured to receive the first indication from a mobility management network element of the first network.

Optionally, when the first device is a network mobile location center, the processing unit 1201 is further configured to determine, based on the stored first information, that there is the location service for the terminal.

It should be understood that the communication apparatus 1200 provided in this embodiment of this application may correspond to the method performed by the first device in the foregoing method embodiments. In addition, the foregoing other operations and/or functions of the units in the communication apparatus 1200 are separately used to implement corresponding steps of the method performed by the first device in the foregoing method embodiments (for example, the method in FIG. 4, FIG. 5, FIG. 6, or FIG. 7), and therefore can also achieve the beneficial effects in the foregoing method embodiments. For brevity, details are not described herein.

For example, the communication apparatus 1200 may be further configured to implement a function of the capability exposure network element of the second network described in this specification. For example, the communication apparatus 1200 may be the capability exposure network element of the second network, may be a component (for example, an integrated circuit or a chip) in the capability exposure network element of the second network, or may be a functional unit.

In an example, the receiving unit 1202 is configured to receive a third indication from the mobility management network element of the second network, where the third indication is used to indicate that there is the location service for the terminal from the first network.

The sending unit 1203 is configured to send a first notification to the capability exposure network element of the first network, where the first notification includes the identifier of the mobility management network element of the second network and an identifier of the terminal, the first notification is used to indicate to send the first information to the mobility management network element of the second network, and the first information is used to execute the location service for the terminal.

It should be understood that the communication apparatus 1200 provided in this embodiment of this application may correspond to the method performed by the capability exposure network element of the second network in the foregoing method embodiments. In addition, the foregoing other operations and/or functions of the units in the communication apparatus 1200 are separately used to implement corresponding steps of the method performed by the capability exposure network element of the second network in the foregoing method embodiments (for example, the method in FIG. 8 or FIG. 9), and therefore can also achieve the beneficial effects in the foregoing method embodiments. For brevity, details are not described herein.

It should be further understood that, in this embodiment, the communication apparatus 1200 is presented in a form of a functional unit. The "unit" herein may be an application-specific integrated circuit ASIC, a circuit, a processor that executes one or more software or firmware programs, a memory, an integrated logic circuit, and/or another component that can provide the foregoing functions.

In an example, a person skilled in the art may figure out that the communication apparatus 1200 may use a form shown in FIG. 3. The processing module 1201 may be implemented through the processor 301 shown in FIG. 3. Optionally, if the communication apparatus shown in FIG. 3 includes the memory 302, the processing module 1201 may be implemented through the processor 301 and the memory 302. The receiving module 1202 and the sending module 1203 may be implemented through the transceiver 303 shown in FIG. 3. The transceiver 303 includes a receiving function and a sending function. Specifically, the processor 301 is implemented by executing a computer program stored in the memory 302.

Optionally, when the communication apparatus 1200 is a chip, functions and/or implementation processes of the receiving module 1202 and the sending module 1203 may alternatively be implemented through a pin, a circuit, or the like. The storage unit may alternatively be a storage unit in the chip of the communication apparatus 1200, for example, a register or a cache. Alternatively, the storage unit may be a storage unit that is in the communication apparatus 1200 and that is located outside the chip, or may be a storage unit deployed in another system or device but not located in the communication apparatus.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them. Correspondingly, the specification and accompanying drawings are merely example description of the invention which is defined by the appended claims. Clearly, a person skilled in the art can make various modifications and variations to this application within the scope of the appended claims.

## Claims

1. A terminal positioning method for maintaining continuity of a location service for a terminal after the terminal is handed over between two networks, comprising:
receiving (402, 502, 602, 702), by a network mobile location center, a first indication from a mobility management network element of a first network, wherein the first indication is used to indicate that the terminal is to be handed over to a second network, wherein the network mobile location center is a gateway mobile location center, and the mobility management network element includes at least one of the following functions related to access and mobility: connection management, mobility management, registration management, access authentication and authorization, reachability management, and security context management;
obtaining, by the network mobile location center, an identifier of a mobility management network element of the second network; and
sending (406, 506, 606/607, 706/707), by the network mobile location center, first information to the mobility management network element of the second network, wherein the first information is used to execute a location service for the terminal and includes information required for executing the location service comprising any one or more of the following:
information used to indicate a triggering event;
information used to indicate positioning accuracy; or
information used to indicate a reporting periodicity.

2. The method according to claim 1, wherein after the receiving (402, 502, 602, 702), by a network mobile location center, a first indication from a mobility management network element of a first network, the method further comprises:
accessing (404, 504, 605, 705), by the network mobile location center, a data management network element, to determine that the terminal has been handed over to the second network.

3. The method according to claim 1 or 2, wherein the obtaining, by the network mobile location center, an identifier of a mobility management network element of the second network comprises:
receiving, by the network mobile location center, the identifier of the mobility management network element of the second network from the data management network element.

4. A terminal positioning method for maintaining continuity of a location service for a terminal after the terminal is handed over between two networks, comprising:
receiving (804, 904), by a capability exposure network element of a second network, a first indication from a capability exposure network element of a first network, wherein the first indication is used to indicate that the terminal is to be handed over to the second network, wherein the capability exposure network element includes at least one of the following functions: securely opening a service and a capability that are provided by a 3GPP network function, such as internally opening or opening to a third party; and converting or translating information exchanged with an application function entity and information exchanged with an internal network function;
obtaining, by the capability exposure network element of the second network, an identifier of a mobility management network element of the second network; and
sending (806, 906), by the capability exposure network element of the second network, first information to the mobility management network element of the second network, wherein the first information is used to execute a location service for the terminal and includes information required for executing the location service comprising any one or more of the following:
information used to indicate a triggering event;
information used to indicate positioning accuracy; or
information used to indicate a reporting periodicity.

5. The method according to claim 4, wherein after the receiving, by a capability exposure network element of a second network, a first indication from a capability exposure network element of a first network, the method further comprises:
accessing, by the capability exposure network element of the second network, a data management network element, to determine that the terminal has been handed over to the second network.

6. The method according to claim 4 or 5, wherein the obtaining, by the capability exposure network element of the second network, an identifier of a mobility management network element of the second network comprises:
receiving, by the capability exposure network element of the second network, the identifier of the mobility management network element of the second network from the data management network element.

7. The method according to any one of claims 4-6, wherein the method further comprises:
receiving, by the capability exposure network element of the second network, a second indication from the capability exposure network element of the first network, wherein the second indication is used to indicate that there is the location service for the terminal.

8. The method according to any one of claims 4-7, wherein before the sending, by the capability exposure network element of the second network, first information to the mobility management network element of the second network, the method further comprises:
sending, by the capability exposure network element of the second network, a request message of the first information to the capability exposure network element of the first network; and
receiving, by the capability exposure network element of the second network, the first information from the capability exposure network element of the first network.

9. A network mobile location center, configured to perform the method according to any one of claims 1 to 3.

10. A capability exposure network element configured to perform the method according to any one of claims 4 to 8.

11. A communication system, comprising a mobility management network element of a first network and a network mobile location center configured to perform the method according to any one of claims 1 to 3.

12. A communication system, comprising a capability exposure network element of a first network and a capability exposure network element of a second network configured to perform the method according to any one of claims 4 to 8.

13. A computer-readable storage medium, comprising instructions, wherein when the instructions are run on a computer of a mobility management network element, the mobility management network element is enabled to perform the method according to any one of claims 1 to 3, or a computer-readable storage medium, comprising instructions, wherein when the instructions are run on a computer of a capability exposure network element, the capability exposure network element is enabled to perform the method according to any one of claims 4 to 8.

## Patentansprüche

1. Endgerätepositionierungsverfahren zum Aufrechterhalten einer Kontinuität eines Ortungsdiensts für ein Endgerät, nachdem das Endgerät zwischen zwei Netzen übergeben wird, umfassend:
Empfangen (402, 502, 602, 702), durch eine Mobilnetzortungszentrale, einer ersten Angabe von einem Mobilitätsverwaltungsnetzelement eines ersten Netzes, wobei die erste Angabe dazu verwendet wird, anzugeben, dass das Endgerät an ein zweites Netz zu übergeben ist, wobei die Mobilnetzortungszentrale eine Mobil-Gateway-Ortungszentrale ist und das Mobilitätsverwaltungsnetzelement mindestens eine der folgenden Funktionen in Bezug auf Zugriff und Mobilität beinhaltet: eine Verbindungsverwaltung, eine Mobilitätsverwaltung, eine Registrierungsverwaltung, eine Zugriffsauthentifizierung und -autorisierung, eine Erreichbarkeitsverwaltung und eine Sicherheitskontextverwaltung;
Erlangen, durch die Mobilnetzortungszentrale, einer Kennung eines Mobilitätsverwaltungsnetzelements des zweiten Netzes; und
Senden (406, 506, 606/607, 706/707), durch die Mobilnetzortungszentrale, erster Informationen an das Mobilitätsverwaltungsnetzelement des zweiten Netzes, wobei die ersten Informationen dazu verwendet werden, einen Ortungsdienst für das Endgerät auszuführen und Informationen beinhalten, die zum Ausführen des Ortungsdiensts erforderlich sind, umfassend eine oder mehrere von Folgendem:
Informationen, die dazu verwendet werden, ein Auslöseereignis anzugeben;
Informationen, die dazu verwendet werden, eine Positionierungsgenauigkeit anzugeben; oder
Informationen, die dazu verwendet werden, eine Berichterstattungsperiodizität anzugeben.

2. Verfahren nach Anspruch 1, wobei das Verfahren nach dem Empfangen (402, 502, 602, 702), durch eine Mobilnetzortungszentrale, einer ersten Angabe von einem Mobilitätsverwaltungsnetzelement eines ersten Netzes, ferner Folgendes umfasst: Zugreifen (404, 504, 605, 705), durch die Mobilnetzortungszentrale, auf ein Datenverwaltungsnetzelement, um zu bestimmen, dass das Endgerät an ein zweites Netz übergeben worden ist.

3. Verfahren nach Anspruch 1 oder 2, wobei das Erlangen, durch die Mobilnetzortungszentrale, einer Kennung eines Mobilitätsverwaltungsnetzelements des zweiten Netzes Folgendes umfasst: Empfangen, durch die Mobilnetzortungszentrale, der Kennung des Mobilitätsverwaltungsnetzelements des zweiten Netzes von dem Datenverwaltungsnetzelement.

4. Endgerätepositionierungsverfahren zum Aufrechterhalten einer Kontinuität eines Ortungsdiensts für ein Endgerät, nachdem das Endgerät zwischen zwei Netzen übergeben wird, umfassend:
Empfangen (804, 904), durch ein Fähigkeitsexpositionsnetzelement eines zweiten Netzes, einer ersten Angabe von einem Fähigkeitsexpositionsnetzelement eines ersten Netzes, wobei die erste Angabe dazu verwendet wird, anzugeben, dass das Endgerät an das zweite Netz zu übergeben ist, wobei das Fähigkeitsexpositionsnetzelement mindestens eine der folgenden Funktionen beinhaltet: sicheres Öffnen eines Dienstes und einer Fähigkeit, die durch eine 3GPP-Netzfunktion bereitgestellt werden, wie etwa internes Öffnen oder Öffnen für Dritte; und Umwandeln oder Übersetzen von Informationen, die mit einer Anwendungsfunktionsentität ausgetauscht werden, und Informationen, die mit einer internen Netzfunktion ausgetauscht werden;
Erlangen, durch das Fähigkeitsexpositionsnetzelement des zweiten Netzes, einer Kennung eines Mobilitätsverwaltungsnetzelements des zweiten Netzes; und
Senden (806, 906), durch das Fähigkeitsexpositionsnetzelement des zweiten Netzes, erster Informationen an das Mobilitätsverwaltungsnetzelement des zweiten Netzes, wobei die ersten Informationen dazu verwendet werden, einen Ortungsdienst für das Endgerät auszuführen, und Informationen beinhalten, die zum Ausführen des Ortungsdiensts erforderlich sind, umfassend eine oder mehrere von Folgendem:
Informationen, die dazu verwendet werden, ein Auslöseereignis anzugeben;
Informationen, die dazu verwendet werden, eine Positionierungsgenauigkeit anzugeben; oder
Informationen, die dazu verwendet werden, eine Berichterstattungsperiodizität anzugeben.

5. Verfahren nach Anspruch 4, wobei das Verfahren nach dem Empfangen, durch ein Fähigkeitsexpositionsnetzelement eines zweiten Netzes, einer ersten Angabe von einem Fähigkeitsexpositionsnetzelement eines ersten Netzes ferner Folgendes umfasst:
Zugreifen, durch das Fähigkeitsexpositionsnetzelement des zweiten Netzes, auf ein Datenverwaltungsnetzelement, um zu bestimmen, dass das Endgerät an das zweite Netz übergeben worden ist.

6. Verfahren nach Anspruch 4 oder 5, wobei das Erlangen, durch das Fähigkeitsexpositionsnetzelement des zweiten Netzes, einer Kennung eines Mobilitätsverwaltungsnetzelements des zweiten Netzes Folgendes umfasst:
Empfangen, durch das Fähigkeitsexpositionsnetzelement des zweiten Netzes, der Kennung des Mobilitätsverwaltungsnetzelements des zweiten Netzes von dem Datenverwaltungsnetzelement.

7. Verfahren nach einem der Ansprüche 4-6, wobei das Verfahren ferner Folgendes umfasst:
Empfangen, durch das Fähigkeitsexpositionsnetzelement des zweiten Netzes, einer zweiten Angabe von dem Fähigkeitsexpositionsnetzelement des ersten Netzes, wobei die zweite Angabe dazu verwendet wird, anzugeben, dass es den Ortungsdienst für das Endgerät gibt.

8. Verfahren nach einem der Ansprüche 4-7, wobei das Verfahren vor dem Senden, durch das Fähigkeitsexpositionsnetzelement des zweiten Netzes, erster Informationen an das Mobilitätsverwaltungsnetzelement des zweiten Netzes ferner Folgendes umfasst:
Senden, durch das Fähigkeitsexpositionsnetzelement des zweiten Netzes, einer Anforderungsnachricht der ersten Informationen an das Fähigkeitsexpositionsnetzelement des ersten Netzes; und
Empfangen, durch das Fähigkeitsexpositionsnetzelement des zweiten Netzes, der ersten Informationen von dem Fähigkeitsexpositionsnetzelement des ersten Netzes.

9. Mobilnetzortungszentrale, die dazu konfiguriert ist, das Verfahren nach einem der Ansprüche 1 bis 3 durchzuführen.

10. Fähigkeitsexpositionsnetzelement, das dazu konfiguriert ist, das Verfahren nach einem der Ansprüche 4 bis 8 durchzuführen.

11. Kommunikationssystem, umfassend ein Mobilitätsverwaltungsnetzelement eines ersten Netzes und eine Mobilnetzortungszentrale, die dazu konfiguriert sind, das Verfahren nach einem der Ansprüche 1 bis 3 durchzuführen.

12. Kommunikationssystem, umfassend ein Fähigkeitsexpositionsnetzelement eines ersten Netzes und ein Fähigkeitsexpositionsnetzelement eines zweiten Netzes, die dazu konfiguriert sind, das Verfahren nach einem der Ansprüche 4 bis 8 durchzuführen.

13. Computerlesbares Speichermedium, umfassend Anweisungen, wobei, wenn die Anweisungen auf einem Computer eines Mobilitätsverwaltungsnetzelements ausgeführt werden, es dem Mobilitätsverwaltungsnetzelement ermöglicht wird, das Verfahren nach einem der Ansprüche 1 bis 3 durchzuführen, oder computerlesbares Speichermedium, umfassend Anweisungen, wobei, wenn die Anweisungen auf einem Computer eines Fähigkeitsexpositionsnetzelements ausgeführt werden, es dem Fähigkeitsexpositionsnetzelement ermöglicht wird, das Verfahren nach einem der Ansprüche 4 bis 8 durchzuführen.

## Revendications

1. Procédé de positionnement de terminal permettant de maintenir la continuité d'un service de localisation pour un terminal après son transfert entre deux réseaux, comprenant :
la réception (402, 502, 602, 702), par un centre de localisation mobile de réseau, d'une première indication provenant d'un élément de réseau de gestion de la mobilité d'un premier réseau, dans lequel la première indication est utilisée pour indiquer que le terminal doit être transféré à un second réseau, dans lequel le centre de localisation mobile de réseau est un centre de localisation mobile de passerelle, et l'élément de réseau de gestion de la mobilité comporte au moins l'une des fonctions suivantes liées à l'accès et à la mobilité : la gestion des connexions, la gestion de la mobilité, la gestion de l'enregistrement, l'authentification et l'autorisation d'accès, la gestion de l'accessibilité et la gestion du contexte de sécurité ;
l'obtention, par le centre de localisation mobile de réseau, d'un identifiant d'un élément de réseau de gestion de la mobilité du second réseau ; et
l'envoi (406, 506, 606/607, 706/707), par le centre de localisation mobile de réseau, de premières informations à l'élément de réseau de gestion de la mobilité du second réseau, dans lequel les premières informations sont utilisées pour exécuter un service de localisation pour le terminal et comporte les informations requises pour l'exécution du service de localisation comprenant un ou plusieurs des éléments suivants :
les informations utilisées pour indiquer un événement déclencheur ;
les informations utilisées pour indiquer la précision du positionnement ; ou
les informations utilisées pour indiquer une périodicité de rapport.

2. Procédé selon la revendication 1, dans lequel, après la réception (402, 502, 602, 702), par un centre de localisation mobile de réseau, d'une première indication provenant d'un élément de réseau de gestion de la mobilité d'un premier réseau, le procédé comprend également :
l'accès (404, 504, 605, 705), par le centre de localisation mobile de réseau, à un élément de réseau de gestion de données, pour déterminer que le terminal a été transféré au second réseau.

3. Procédé selon la revendication 1 ou 2, dans lequel l'obtention, par le centre de localisation mobile de réseau, d'un identifiant d'un élément de réseau de gestion de la mobilité du second réseau comprend :
la réception, par le centre de localisation mobile de réseau, de l'identifiant de l'élément de réseau de gestion de la mobilité du second réseau en provenance de l'élément de réseau de gestion de données.

4. Procédé de positionnement de terminal permettant de maintenir la continuité d'un service de localisation pour un terminal après son transfert entre deux réseaux, comprenant :
la réception (804, 904), par un élément de réseau d'exposition de capacité d'un second réseau, d'une première indication provenant d'un élément de réseau d'exposition de capacité d'un premier réseau, dans lequel la première indication est utilisée pour indiquer que le terminal doit être transféré au second réseau, dans lequel l'élément de réseau d'exposition de capacité comporte au moins l'une des fonctions suivantes : l'ouverture sécurisée d'un service et d'une capacité qui sont fournis par une fonction de réseau 3GPP, telle que l'ouverture interne ou l'ouverture à un tiers ; et la conversion ou la traduction des informations échangées avec une entité de fonction d'application et des informations échangées avec une fonction de réseau interne ;
l'obtention, par l'élément de réseau d'exposition de capacité du second réseau, d'un identifiant d'un élément de réseau de gestion de la mobilité du second réseau ; et
l'envoi (806, 906), par l'élément de réseau d'exposition de capacité du second réseau, de premières informations à l'élément de réseau de gestion de la mobilité du second réseau, dans lequel les premières informations sont utilisées pour exécuter un service de localisation pour le terminal et comporte les informations requises pour l'exécution du service de localisation comprenant un ou plusieurs des éléments suivants :
les informations utilisées pour indiquer un événement déclencheur ;
les informations utilisées pour indiquer la précision du positionnement ; ou
les informations utilisées pour indiquer une périodicité de rapport.

5. Procédé selon la revendication 4, dans lequel, après la réception, par un élément de réseau d'exposition de capacité d'un second réseau, d'une première indication provenant d'un élément de réseau d'exposition de capacité d'un premier réseau, le procédé comprend également :
l'accès, par l'élément de réseau d'exposition de capacité du second réseau, à un élément de réseau de gestion de données, pour déterminer que le terminal a été transféré au second réseau.

6. Procédé selon la revendication 4 ou 5, dans lequel l'obtention, par l'élément de réseau d'exposition de capacité du second réseau, d'un identifiant d'un élément de réseau de gestion de la mobilité du second réseau comprend :
la réception, par l'élément de réseau d'exposition de capacité du second réseau, de l'identifiant de l'élément de réseau de gestion de la mobilité du second réseau à partir de l'élément de réseau de gestion de données.

7. Procédé selon l'une quelconque des revendications 4 à 6, dans lequel le procédé comprend également :
la réception, par l'élément de réseau d'exposition de capacité du second réseau, d'une seconde indication provenant de l'élément de réseau d'exposition de capacité du premier réseau, dans lequel la seconde indication est utilisée pour indiquer qu'il existe un service de localisation pour le terminal.

8. Procédé selon l'une quelconque des revendications 4 à 7, dans lequel, avant l'envoi, par l'élément de réseau d'exposition de capacité du second réseau, de premières informations à l'élément de réseau de gestion de la mobilité du second réseau, le procédé comprend également :
l'envoi, par l'élément de réseau d'exposition de capacité du second réseau, d'un message de demande des premières informations à l'élément de réseau d'exposition de capacité du premier réseau ; et
la réception, par l'élément de réseau d'exposition de capacité du second réseau, des premières informations provenant de l'élément de réseau d'exposition de capacité du premier réseau.

9. Centre de localisation mobile de réseau, configuré pour réaliser le procédé selon l'une quelconque des revendications 1 à 3.

10. Élément de réseau d'exposition de capacité configuré pour réaliser le procédé selon l'une quelconque des revendications 4 à 8.

11. Système de communication comprenant un élément de réseau de gestion de la mobilité d'un premier réseau et un centre de localisation mobile de réseau configuré pour réaliser le procédé selon l'une quelconque des revendications 1 à 3.

12. Système de communication comprenant un élément de réseau d'exposition de capacité d'un premier réseau et un élément de réseau d'exposition de capacité d'un second réseau, configurés pour réaliser le procédé selon l'une quelconque des revendications 4 à 8.

13. Support de stockage lisible par ordinateur, comprenant des instructions, dans lequel lorsque les instructions sont exécutées sur un ordinateur d'un élément de réseau de gestion de mobilité, l'élément de réseau de gestion de mobilité est activé pour réaliser le procédé selon l'une quelconque des revendications 1 à 3, ou un support de stockage lisible par ordinateur, comprenant des instructions, dans lequel lorsque les instructions sont exécutées sur un ordinateur d'un élément de réseau d'exposition de capacité, l'élément de réseau d'exposition de capacité est activé pour réaliser le procédé selon l'une quelconque des revendications 4 à 8.
